# EUROPEAN PATENT SPECIFICATION

(11) **EP 3 804 097 B1**
(45) Date of publication and mention of the grant of the patent: **02.12.2026**
(21) Application number: 18731995.9
(22) Date of filing: 08.06.2018
(51) Int. Cl.: H02K 5/128, H02K 7/14, F04D 13/06

(54) **CANNED ELECTRIC MOTOR**
ELEKTRISCHER SPALTROHRMOTOR
MOTEUR ÉLECTRIQUE À GAINE

(43) Date of publication of application: 14.04.2021
(73) Proprietor: Pierburg Pump Technology GmbH, 41460 Neuss (DE)
(72) Inventor: HOHMANN, Jan, 44263 Dortmund (DE); HELMIS, Martin, 41464 Neuss (DE); SAUER, Andreas, 41564 Kaarst (DE); LÖKES, Andreas, 47877 Willich (DE)
(74) Representative: Eisenführ Speiser
(86) International application number: PCT/EP2018/065166
(87) International publication number: WO 2019/233598

(56) References cited:
- EP-A2- 2 375 546
- EP-A2- 2 645 542
- WO-A1-93/17484
- WO-A2-2014/198622
- JP-A- 2005 184 958
- US-A1- 2006 017 339
- US-B2- 9 318 931

## Description

The invention is directed to a canned electric motor for a fluid pump, preferably for a liquid coolant pump of a motor vehicle.

A motor vehicle electric coolant pump is typically provided to circulate a coolant of a motor vehicle cooling circuit, primarily for cooling an internal combustion engine of the motor vehicle. To avoid damage of the internal combustion engine, the electric coolant pump and, in particular, the electric motor of the electric coolant pump has to be reliable and failsafe. Coolant pumps are typically provided with a canned electric motor, wherein the moisture-sensitive electromagnetic motor stator and motor electronics are fluidically separated from the motor rotor by a separating can. As a result, the motor rotor can be arranged in fluidic contact with the coolant so that no wear-prone dynamic sealings are required for fluid-tightly sealing the rotating rotor shaft which co-rotatably connects the pump wheel with the motor rotor.

An electric coolant pump is disclosed, for example, in DE 199 43 862 A1. The coolant pump is provided with a canned electric motor with a static motor frame, a rotatable motor rotor co-rotatably connected with a rotor shaft, a static motor stator with a stator body, and a separating can fluidically separating the motor stator from the motor rotor. The static motor frame separates a pumping chamber from a motor chamber and is provided with a separating can reception defined by a motor frame opening and a support ring. The separating can is fixed at the motor frame by a separate fixing means being press-fitted into the motor frame opening and axially pressing a holding flange of the separating can towards a holding flange of the separating can reception. However, the separate fixing means requires an additional assembling process. In addition, the press-fitting connection may become loosen caused by motor vibrations.

To minimize a fluid leakage from the pumping chamber into the motor chamber via the gap between the motor frame and the separating can, the coolant pump is provided with a seal ring being arranged axially between the holding flange of the separating can and the holding flange of the separating can reception. However, a loosening of the press-fitting connection, for example caused by motor vibrations, can cause significant coolant leakage through the motor frame opening into the motor chamber which can damage or even destroy the electromagnetic motor stator and/or the motor electronics. This can cause a malfunction or even a failure of the coolant pump which can cause severe damage of the internal combustion engine of the motor vehicle.

EP 2 645 542 A2 discloses a canned electric motor for a vacuum pump, the electric motor comprising a static motor frame, a rotatable motor rotor co-rotatably connected with a rotor shaft, a static motor stator with a stator body, and a separating can fluidically separating the motor stator from the motor rotor. The separating can comprises two axial sections which are provided with different radial sidewall thickness and therefore define a radial step at their interface. The separating can is supported in a first axial direction by the stator body via the radial step and is supported in an opposite second axial section by a separate housing element which is attached to the static motor frame.

US 9,318,931 B2 discloses a canned electric motor for a water pump, the electric motor comprising a static motor frame, a rotatable motor rotor co-rotatably connected with a rotor shaft, and a static motor stator with a stator body. The electric motor is provided with a complex stator case which is arranged within the motor frame and which houses and supports the motor stator. The stator case surrounds the motor stator at both radial sides and defines a separating can fluidically separating the motor stator from the motor rotor. The stator case is supported in a first axial section by the motor frame and is supported in an opposite second axial direction by a separate housing element which is attached to the static motor frame.

It is an object of the invention to provide a cost-efficient and reliable canned electric motor for a fluid pump.

This object is achieved with canned electric motor for a fluid pump with the features of claim 1.

The canned electric motor according to the invention is provided with a static motor frame. The motor frame can be provided integrally with a static motor housing or can be a separate element being attached to the motor housing. The motor frame substantially extends in a radial plane.

The canned electric motor according to the invention is also provided with a rotatable motor rotor co-rotatably connected with a rotor shaft, a static motor stator with a stator body and a separating can. The separating can extends through the air gap between the motor rotor and the motor stator and fluidically separates the motor rotor from the motor stator and from the motor electronics. As a result, the motor rotor can be arranged within a fluidic part of the fluid pump so that the motor rotor can be easily attached to a pump wheel. The moisture-sensitive electromagnetic motor stator and the motor electronics can be arranged at the dry side of the separating can. No expensive and wear-prone dynamic sealings are required.

The stator body is directly fixed to the motor frame so that no additional stator support means is required. Preferably, the stator body is screwed to the motor frame to provide a reliable fixation which withstands relatively large leverage forces.

The separating can is provided with an axial support means radially protruding from an outside of the separating can. The axial support means can be, for example, defined by a single support flange radially surrounding the separating can outside. Alternatively, the axial support means can be defined by several separate support projections distributed along the circumference of the separating can outside.

According to the invention, the separating can is supported in a first axial direction by the stator body via the axial support means and in an opposite second axial direction by the motor frame so that no additional fixing means is required. This allows a cost-efficient and reliable fixation of the separating can at the motor frame. Since the separating can is axially supported between the motor frame and the motor stator, no motor frame opening is required in which the separating can is inserted and which must be fluid tightly sealed. This allows a very reliable fluidic separation of the dry motor chamber from the fluidic part of the fluid pump and, as a result, allows a very reliable electric motor.

According to the invention, the motor frame is provided with a separating can reception ring axially protruding from the motor frame and radially supporting and positioning the separating can. The reception ring can be arranged either inside or outside of the separating can. In the first case, the reception ring outside supports the separating can inside and in the second case, the reception ring inside supports the separating can outside. In any case, the reception ring allows exact and reliable radial support and positioning of the separating can with respect to the motor frame and, as a result, with respect to the motor stator and the motor rotor.

In a preferred embodiment of the invention, the separating can is made of thermosetting plastic so that the separating can can be manufactured with low tolerances, i.e. the separating can can be manufactured very exactly. As a result, the air gap between the motor stator and the motor rotor, through which the separating can extends, can be dimensioned relatively small which allows a higher motor efficiency.

Preferably, the separating can is supported via the axial support means unilaterally in the first axial direction and is supported unilaterally in the second axial direction via a second axial support means. The second axial support means can be, for example, defined by the motor-frame-facing front side of the separating can which is directly supported by the motor frame in the second axial direction. This allows an easy and reliable axial support of the separating can.

Preferably, the separating can reception ring is provided with a least one positioning recess and the separating can is provided with at least one corresponding positioning nose. The positioning nose radially protrudes from the axial support means of the separating can and engages into the positioning recess to rotationally position the separating can with respect to the motor frame. The static rotational position of the separating can allows easily attaching a magnetic field sensor to the separating can outside, wherein the magnetic field sensor can accurately determine the rotational position of the motor rotor.

In a preferred embodiment of the invention, the electric motor is provided with a seal ring fluidically sealing a gap between the separating can and the motor frame, and the separating can is provided with a seal support ring surrounding the separating can and axially supporting the seal ring. The seal ring radially surrounds the separating can and is arranged axially between the motor frame and the seal support ring. The seal support ring causes a reliable support of the seal ring and, as a result, a reliable sealing of the gap between the separating can and the motor frame.

Preferably, the axial support means is defined by several support teeth distributed merlon-like along the circumference of the separating can. The circumferentially spaced teeth avoid a deformation of the separating can caused by cooling shrinkage of the axial support means during the manufacturing. Nevertheless, the several support teeth allow a reliable axial support of the separating can by the motor stator.

In a preferred embodiment of the invention, the separating can is provided with a rotor shaft reception being only supported by the separating can, wherein the rotor shaft reception receives and supports a rotor shaft bearing. The rotor shaft bearing supports a pump-wheel-remote rotor shaft end so that no additional support means are required for supporting the rotor shaft within the motor chamber. This allows a compact electric motor. In addition, since the motor/pump housing does not support the rotor shaft, the housing contour can be easily adapted to predefined installation space geometries, for example within an engine compartment of a motor vehicle.

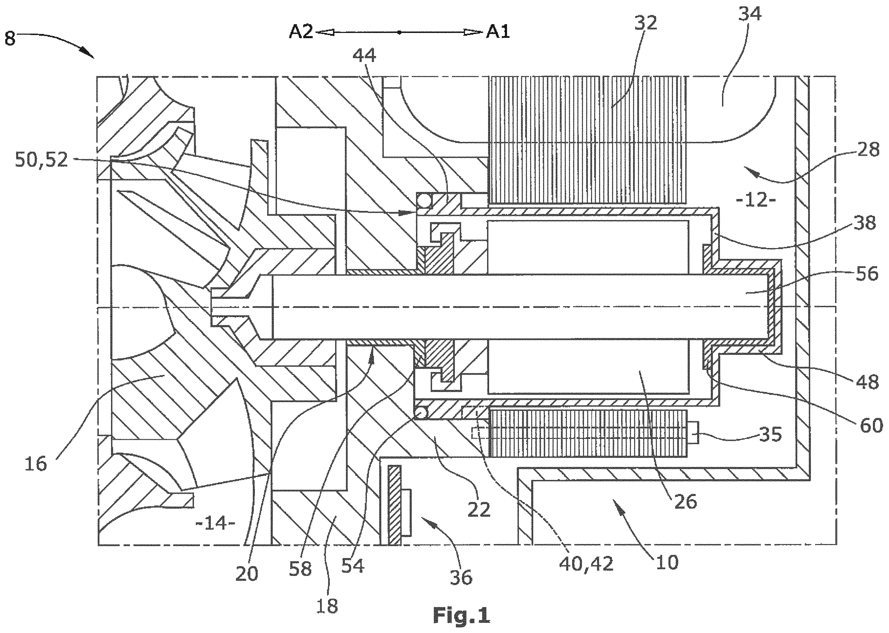

An embodiment of the invention is described with reference to the enclosed drawings, wherein
figure 1 shows a schematic sectional side view of an electric coolant pump with an canned electric motor according to the invention,

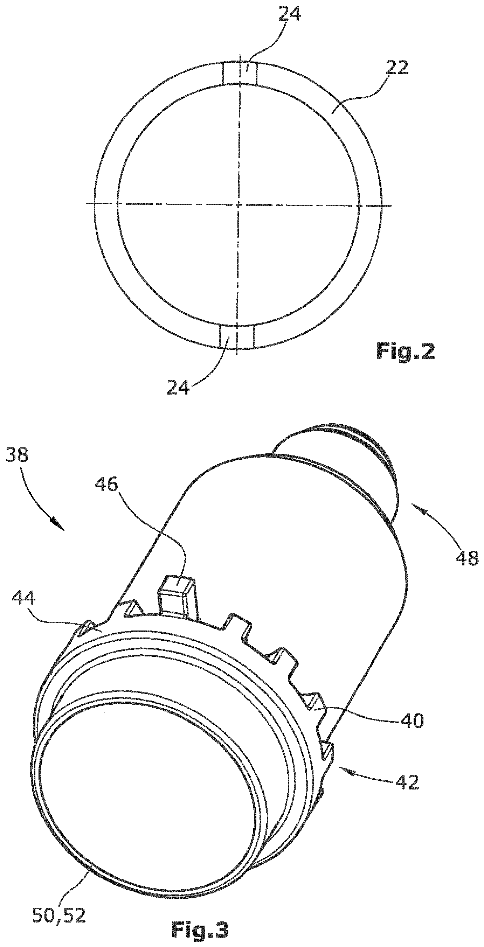

figure 2 shows a schematic axial plan view of a separating can reception ring of the electric motor of figure 1, and
figure 3 shows a schematic perspective side view of a separating can of the canned electric motor of figure 1.

The coolant pump 8 is provided with a canned electric motor 10 being arranged in a dry motor chamber 12. The motor chamber 12 is fluidically separated from a pumping chamber 14 in which a rotatable pump wheel 16 is arranged and which is filled with a coolant. The motor chamber 12 and the pumping chamber 14 are axially separated from each other by a substantially radially extending motor frame 18.

The motor frame 18 is provided with a rotor shaft opening 20 and a separating can reception ring 22 surrounding the rotor shaft opening 20. The reception ring 22 axially protrudes from the motor-chamber-facing side of the motor frame 18 and is provided with two diametrically opposite positioning recesses 24 at its front side.

The electric motor 10 comprises a permanently magnetized and rotatable motor rotor 26 and an electromagnetic and static motor stator 28. The motor stator 28 comprises a laminated stator body 32 and an electromagnetic stator coil 34. In the present embodiment of the invention, the stator body 32 is fixed to the motor frame 18 by several screws 35. The stator coil 34 is electrically energized by a motor electronics 36.

The motor rotor 26 and the motor stator 28 are fluidically separated from each other by a separating can 38 which, in the present embodiment of the invention, is made of a thermosetting plastic. The separating can 38 is provided with a substantially circular cross section and extends through the air gap between the motor rotor 26 and the motor stator 28.

The separating can 38 is provided with several support teeth 40 protruding from the radial outside of the separating can 38. The support teeth 40 are distributed merlon-like along the circumference of the separating can 38 and define a first axial support means 42. The separating can 38 comprises a seal supporting ring 44 being arranged at the pump-wheel-facing side of the first axial support means 42 and surrounding the separating can 38. The separating can 38 is provided with two diametrically arranged positioning noses 46 radially protruding from the first axial support means 42. The separating can 38 comprises a rotor shaft reception 48 being located at the pump-wheel-remote axial end of the separating can 38. In the present embodiment, the first axial support means 42, the seal supporting ring, the positioning noses 46 and the rotor shaft reception 48 are provided integrally with the separating can 38.

The separating can 38 is introduced into and radially supported by the separating can reception ring 22. The separating can 38 is supported in a first pump-wheel-remote axial direction A1 by the stator body 32 via the axial support means 42. The separating can 38 is supported in a second opposite axial direction A2 by a second axial support means 50 which, in the present embodiment of the invention, is defined by the motor-frame-facing front side 52 of the separating can 38. As a result, the separating can 38 is only supported by the motor frame 18 and the motor stator 28.

The positioning noses 46 of the separating can 38 engage into the positioning recesses 24 of the separating can reception ring 22 to rotationally position the separating can 38 with respect to the motor frame 18.

The electric motor 10 is provided with a seal ring 54 fluidically sealing a gap between the motor frame 18 and the separating can 38. The seal ring 54 is radially supported by the inside of the separating can reception ring 22 and the outside of the separating can 38 and is axially supported by the motor frame 18 and the seal support ring 44 of the separating can.

The motor rotor 26 is co-rotatably connected with the pump wheel 16 via a rotor shaft 56 extending through the rotor shaft opening 20 of the motor frame 18. The rotor shaft 56 is supported by two rotor shaft bearings 58,60. The first rotor shaft bearing 58 is arranged within the rotor shaft opening 20 of the motor frame 18 and the second rotor shaft bearing 60 is received by the rotor shaft reception 48 of the separating can 28.

### Reference list

- 8: electric coolant pump
- 10: canned electric motor
- 12: motor chamber
- 14: pumping chamber
- 16: pump wheel
- 18: motor frame
- 20: rotor shaft opening
- 22: separating can reception ring
- 24: positioning recesses
- 26: motor rotor
- 28: motor stator
- 32: stator body
- 34: stator coil
- 35: screws
- 36: motor electronics
- 38: separating can
- 40: support teeth
- 42: first axial support means
- 44: seal supporting ring
- 46: positioning noses
- 48: rotor shaft reception
- 50: second axial support means
- 52: separating can front side
- 54: seal ring
- 56: rotor shaft
- 58: first rotor shaft bearing
- 60: second rotor shaft bearing
- A1: first axial direction
- A2: second axial direction

## Claims

1. Canned electric motor (10) for a fluid pump (8), comprising a static motor frame (18),
a rotatable motor rotor (26) co-rotatably connected with a rotor shaft (56),
a static motor stator (28) with a stator body (32) and
a separating can (38) fluidically separating the motor stator (28) from the motor rotor (26),
wherein the stator body (32) is directly fixed to the motor frame (18), wherein the separating can (38) is provided with an axial support means (42) radially protruding from an outside of the separating can (38),
wherein the separating can (38) is supported in a first axial direction (A1) by the stator body (32) via the axial support means (42) and is supported in an opposite second axial direction (A2) by the motor frame (18), **characterized in that** the motor frame (18) is provided with a separating can reception ring (22) axially protruding from the motor frame (18) and radially supporting and positioning the separating can (38).

2. Canned electric motor (10) according to claim 1, wherein the separating can (38) is made of thermosetting plastic.

3. Canned electric motor (10) according to any preceding claim, wherein the separating can (38) is supported via the axial support means (42) unilaterally in the first axial direction (A1), and
wherein the separating can (38) is supported unilaterally in the second axial (A2) direction via a second axial support means (52).

4. Canned electric motor (10) according to any preceding claim, wherein the separating can reception ring (22) is provided with at least one positioning recess (24), and
wherein the separating can (38) is provided with at least one corresponding positioning nose (46) radially protruding from the axial support means (42) and engaging into the positioning recess (24) to rotationally position the separating can (38) with respect to the motor frame (18).

5. Canned electric motor (10) according to any preceding claim, wherein the electric motor (10) is provided with a seal ring (54) fluidically sealing a gap between the separating can (38) and the motor frame (18), and
wherein the separating can (38) is provided with a seal support ring (44) surrounding the separating can (38) and axially supporting the seal ring (54).

6. Canned electric motor (10) according to any preceding claim, wherein the axial support means (42) is defined by several support teeth (40) distributed merlon-like along the circumference of the separating can (38).

7. Canned electric motor (10) according to any preceding claim, wherein the separating can (38) is provided with a rotor shaft reception (46) being only supported by the separating can (38) and
wherein the rotor shaft reception (46) receives and supports a rotor shaft bearing (60).

## Patentansprüche

1. Spaltrohrmotor (10) für eine Fluidpumpe (8), umfassend
einen statischen Motorrahmen (18),
einen drehbaren Motorrotor (26), der drehfest mit einer Rotorwelle (56) verbunden ist,
einen statischen Motorstator (28) mit einem Statorkörper (32) und
ein Spaltrohr (38), das den Motorstator (28) von dem Motorrotor (26) fluidisch trennt, wobei der Statorkörper (32) unmittelbar an dem Motorrahmen (18) fixiert ist, wobei das Spaltrohr (38) mit einem axialen Stützmittel (42) versehen ist, das radial von einer Außenseite des Spaltrohrs (38) abragt,
wobei das Spaltrohr (38) in einer ersten Axialrichtung (A1) von dem Statorkörper (32) über das axiale Stützmittel (42) gestützt ist und in einer entgegengesetzten zweiten Axialrichtung (A2) von dem Motorrahmen (18) gestützt ist,
**dadurch gekennzeichnet, dass** der Motorrahmen (18) mit einem Spaltrohr-Aufnahmering (22) versehen ist, der axial von dem Motorrahmen (18) abragt und das Spaltrohr (38) radial stützt und positioniert.

2. Spaltrohrmotor (10) nach Anspruch 1, wobei das Spaltrohr (38) aus Duroplast hergestellt ist.

3. Spaltrohrmotor (10) nach einem der vorhergehenden Ansprüche, wobei das Spaltrohr (38) über das axiale Stützmittel (42) einseitig in der ersten Axialrichtung (A1) gestützt ist, und wobei das Spaltrohr (38) einseitig in der zweiten Axialrichtung (A2) über ein zweites axiales Stützmittel (52) gestützt ist.

4. Spaltrohrmotor (10) nach einem der vorhergehenden Ansprüche, wobei der Spaltrohr-Aufnahmering (22) mit mindestens einer Positionierungsaussparung (24) versehen ist, und wobei das Spaltrohr (38) mit mindestens einer entsprechenden Positionierungsnase (46) versehen ist, die radial von dem axialen Stützmittel (42) abragt und in die Positionierungsaussparung (24) eingreift, um das Spaltrohr (38) gegenüber dem Motorrahmen (18) in Drehrichtung zu positionieren.

5. Spaltrohrmotor (10) nach einem der vorhergehenden Ansprüche, wobei der Elektromotor (10) mit einem Dichtring (54) versehen ist, der einen Spalt zwischen dem Spaltrohr (38) und dem Motorrahmen (18) fluidisch abdichtet, und wobei das Spaltrohr (38) mit einem Dichtungsstützring (44) versehen ist, der das Spaltrohr (38) umgibt und den Dichtring (54) axial stützt.

6. Spaltrohrmotor (10) nach einem der vorhergehenden Ansprüche, wobei das axiale Stützmittel (42) durch mehrere Stützzähne (40) definiert ist, die zinnenartig entlang des Umfangs des Spaltrohrs (38) verteilt sind.

7. Spaltrohrmotor (10) nach einem der vorhergehenden Ansprüche, wobei das Spaltrohr (38) mit einer Rotorwellenaufnahme (46) versehen ist, die ausschließlich von dem Spaltrohr (38) gestützt ist, und wobei die Rotorwellenaufnahme (46) ein Rotorwellenlager (60) aufnimmt und stützt.

## Revendications

1. Moteur électrique noyé (10) pour une pompe à fluide (8), comprenant un bâti moteur statique (18),
un rotor moteur rotatif (26) relié de manière solidaire en rotation à un arbre de rotor (56),
un stator moteur statique (28) avec un corps de stator (32) et
une chemise de séparation (38) séparant de manière fluidique le stator moteur (28) du rotor moteur (26),
dans lequel le corps de stator (32) est fixé directement au bâti moteur (18),
dans lequel la chemise de séparation (38) est pourvue d'un moyen de support axial (42) faisant saillie radialement à partir d'un côté extérieur de la chemise de séparation (38),
dans lequel la chemise de séparation (38) est supportée dans une première direction axiale (A1) par le corps de stator (32) par l'intermédiaire du moyen de support axial (42) et est supportée dans une seconde direction axiale opposée (A2) par le bâti moteur (18), **caractérisé en ce que**
le bâti moteur (18) est pourvu d'une bague de réception de chemise de séparation (22) faisant saillie axialement à partir du bâti moteur (18) et supportant et positionnant radialement la chemise de séparation (38).

2. Moteur électrique noyé (10) selon la revendication 1, dans lequel la chemise de séparation (38) est réalisée en matière plastique thermodurcissable.

3. Moteur électrique noyé (10) selon l'une quelconque des revendications précédentes, dans lequel la chemise de séparation (38) est supportée par l'intermédiaire du moyen de support axial (42) de manière unilatérale dans la première direction axiale (A1), et dans lequel la chemise de séparation (38) est supportée de manière unilatérale dans la seconde direction axiale (A2) par l'intermédiaire d'un deuxième moyen de support axial (52).

4. Moteur électrique noyé (10) selon l'une quelconque des revendications précédentes, dans lequel la bague de réception de chemise de séparation (22) est pourvue d'au moins un évidement de positionnement (24), et dans lequel la chemise de séparation (38) est pourvue d'au moins un ergot de positionnement (46) correspondant faisant saillie radialement à partir du moyen de support axial (42) et venant en prise dans l'évidement de positionnement (24) pour positionner en rotation la chemise de séparation (38) par rapport au bâti moteur (18).

5. Moteur électrique noyé (10) selon l'une quelconque des revendications précédentes, dans lequel le moteur électrique (10) est pourvu d'une bague d'étanchéité (54) assurant l'étanchéité fluidique d'un espace entre la chemise de séparation (38) et le bâti moteur (18), et dans lequel la chemise de séparation (38) est pourvue d'une bague de support d'étanchéité (44) entourant la chemise de séparation (38) et supportant axialement la bague d'étanchéité (54).

6. Moteur électrique noyé (10) selon l'une quelconque des revendications précédentes, dans lequel le moyen de support axial (42) est défini par plusieurs dents de support (40) réparties en forme de créneau le long de la circonférence de la chemise de séparation (38).

7. Moteur électrique noyé (10) selon l'une quelconque des revendications précédentes, dans lequel la chemise de séparation (38) est pourvue d'un logement d'arbre de rotor (46) uniquement supporté par la chemise de séparation (38) et dans lequel le logement d'arbre de rotor (46) reçoit et supporte un palier d'arbre de rotor (60).
